# EUROPÄISCHE PATENTSCHRIFT

(11) **EP 3 172 419 B1**
(45) Veröffentlichungstag und Bekanntmachung des Hinweises auf die Patenterteilung: **16.05.2018**
(21) Anmeldenummer: 15748201.9
(22) Anmeldetag: 24.07.2015
(51) Int. Cl.: F02B 33/42, F04F 13/00, F02B 39/14, F02B 39/00

(54) **DRUCKWELLENLADER**
PRESSURE WAVE SUPERCHARGER
SYSTÈME DE SURALIMENTATION À ONDES DE PRESSION

(30) Priorität: 24.07.2014 EP 14178435; 11.08.2014 EP 14180557
(43) Veröffentlichungstag der Anmeldung: 31.05.2017
(73) Patentinhaber: Antrova AG, 8260 Stein am Rhein (CH)
(72) Erfinder: SKOPIL, Mario, CH-8903 Birmensdorf (CH)
(74) Vertreter: Fenner, Seraina
(86) Internationale Anmeldenummer: PCT/EP2015/066983
(87) Internationale Veröffentlichungsnummer: WO 2016/012585

(56) Entgegenhaltungen:
- AT-B- 334 503
- CH-A- 342 414
- DE-C- 879 344
- FR-A- 1 283 574
- GB-A- 672 994
- GB-A- 680 358
- US-A- 2 800 120
- US-A1- 2006 037 907

## Beschreibung

Die Erfindung betrifft einen Druckwellenlader.

### Stand der Technik

Bei mit Verbrennungsmotoren betriebenen Fahrzeugen erfordert die Gesetzgebung zunehmend niedrigere Schadstoffemissionen und insbesondere einen geringen Kraftstoffverbrauch. Der Wandlungsprozess von Kraftstoffenergie in mechanische Energie unterliegt dabei dem ideellen Carnotprozess, so dass der Wirkungsgrad eines Verbrennungsmotors auf maximal ca. 40% begrenzt ist. Die restliche in dem Kraftstoff enthaltene Energie wird als Verlustwärme über den Motorblock des Verbrennungsmotors oder über das Abgas abgegeben. Um den Wirkungsgrades von Verbrennungsmotoren weiter zu steigern werden Verbrennungsmotoren aufgeladen. Hierbei wird die zum Verbrennungsprozess benötigte angesaugte Frischluft komprimiert, so dass ein höherer Füllungsgrad des Zylinders bei einem Ladungswechselvorgang erreicht wird. Der höhere Füllungsgrad des Zylinders mit Frischluft ermöglicht eine höhere Einspeisung, beispielsweise Einspritzung von Kraftstoff und somit eine Erhöhung der Verbrennungsleistung pro Verbrennungstakt, bei gleichbleibender Reibleistung des Verbrennungsmotors. Hierdurch steigt die effektive Leistung des Verbrennungsmotors, so dass es möglich ist für eine gleiche zur Verfügung gestellte Leistung einen hubraumschwächeren Motor einzusetzen und somit den Kraftstoffverbrauch sowie den CO₂-Ausstoss zu senken.

Als Verdichter zum Aufladen eines Verbrennungsmotors ist insbesondere ein Druckwellenlader geeignet. Der Druckwellenlader, wie dieser beispielsweise aus der Druckschrift EP0235609A1 bekannt ist, nutzt dabei im direkten Gaskontakt die Energie der Abgasströmung zur Verdichtung der angesaugten Frischluft und wird in der häufigsten Bauform mit einem rotierenden Zellenrotor ausgebildet. Um eine effektive Wirkungsgradsteigerung des Verbrennungsmotors zu erreichen ist es von zentraler Bedeutung, dass der Aufladeprozess mittels Druckwellenlader ebenfalls mit einem hohen Wirkungsgrad erfolgt.

Bekannte Druckwellenlader weisen den Nachteil auf, dass der Spalt zwischen dem rotierenden Zellenrotor und feststehenden Teilen relativ gross ausgestaltet ist, um während dem Betrieb des Druckwellenladers eine mechanische Beschädigung des rotierenden Zellrotors zu vermeiden. Dieser relativ grosse Spalt hat einen reduzierten Wirkungsgrad zur Folge, sowohl während dem Betrieb, insbesondere jedoch auch während dem Kaltstart. Die Offenlegungsschrift DE 102012101922A1 offenbart einen Druckwellenlader mit reduzierter Spaltbreite. Nachteilig an dieser Vorrichtung ist, dass diese eine Klemmneigung aufweist, sodass nach dem Auftreten eines Klemmens eine Reduzierung der Spaltbreite nicht mehr möglich ist.
Die GB 672,994 und die DE 879 344 zeigen Druckwellenlader mit jeweils nur einem Rotor. Die US 2006/0037907 A1 zeigt einen Drucktauscher mit Spaltüberbrückung.

### Darstellung der Erfindung

Aufgabe der Erfindung ist es einen Druckwellenlader mit erhöhtem Wirkungsgrad zu bilden.

Diese Aufgabe wird gelöst mit einem Druckwellenlader aufweisen die Merkmale von Anspruch 1. Die Unteransprüche 2 bis 16 betreffen weitere vorteilhafte Ausgestaltungen.

Die Aufgabe wird gelöst mit einem Druckwellenlader zum Verdichten von Frischluft für einen Verbrennungsmotor, umfassend ein Kaltgasgehäuse, ein Heissgasgehäuse sowie ein dazwischen angeordnetes Rotorgehäuse, wobei innerhalb des Rotorgehäuses ein rotierbarer Zellenrotor angeordnet ist, wobei der Zellenrotor eine Mehrzahl von Rotorzellen aufweist, welche in Verlaufsrichtung des Zellenrotors verlaufen und eine Fluid leitende Verbindung ausbilden, und wobei das Heissgasgehäuse einen Hochdruckabgaskanal und einen Niederdruckabgaskanal umfasst, und wobei das Kaltgasgehäuse einen Frischluftkanal und einen Ladeluftkanal umfasst, und wobei der Hochdruckabgaskanal, der Niederdruckabgaskanal, der Frischluftkanal und der Ladeluftkanal Fluid leitend mit dem Zellenrotor verbunden sind, wobei das Kaltgasgehäuse ein Zellenrotorlager umfasst, wobei der Zellenrotor mit einer Rotorwelle verbunden ist, wobei die Rotorwelle im Zellenrotorlager gelagert ist, und wobei der Zellenrotor in Verlaufsrichtung der Rotorwelle geteilt ist und zumindest ein erstes Zellenrotorteil und ein zweites Zellenrotorteil umfasst, wobei das erste und das zweite Zellenrotorteil in Verlaufsrichtung der Rotorwelle gegenseitig beabstandet sind, unter Ausbildung eines Spaltes, und wobei der Spalt offen ist, sodass vom ersten Zellenrotorteil zum zweiten Zellenrotorteil in Verlaufsrichtung der Rotorwelle nacheinander folgende Rotorzellen über den offenen Spalt Fluid leitend miteinander verbunden sind.

Ein Druckwellenlader und insbesondere dessen Zellenrotor muss derart ausgestaltet sein, dass auch bei hohen Temperaturschwankungen ein sicherer und zuverlässiger Betrieb gewährleistet ist. So weist ein Druckwellenlader beispielsweise beim Start eines Kraftfahrzeuges Umgebungstemperatur auf. Das vom Verbrennungsmotor in den Zellenrotor einzuströmende Abgas weist zum Beispiel bei Benzinmotoren während dem Betrieb eine Abgastemperatur von bis zu etwa 1050 °C auf, was eine thermisch bedingte Längsausdehnung des Zellenrotors zur Folge hat.

Der erfindungsgemässe Druckwellenlader umfasst einen in Verlaufsrichtung der Rotorwelle geteilten Zellenrotor, mit zumindest einem ersten und einem zweiten Zellenrotorteil, sodass sich zwischen dem ersten und dem zweiten Zellenrotorteil in Verlaufsrichtung der Rotorwelle ein Spalt ausbildet. Der Spalt weist in einer vorteilhaften Ausgestaltung bei Umgebungstemperatur eine Breite von maximal 0,5 mm auf. In einer vorteilhaften Ausgestaltung ist der Spalt in der Mitte des Zellenrotors angeordnet.

Der erfindungsgemässe Zellenrotor ist derart ausgestaltet, dass die temperaturbedingte Längenausdehnung zur Folge hat, dass sich der Spalt während dem Erwärmen verkleinert beziehungsweise während dem Abkühlen vergrössert. Ein Druckwellenlader aufweisend einen derart ausgestalteten Zellenrotor weist in einer besonders vorteilhaften Ausgestaltung die Eigenschaft auf, dass der Spalt zwischen der Stirnseite des Zellenrotors und der Stirnseite des Heissgasgehäuses temperaturunabhängig dieselbe oder im Wesentlichen dieselbe Spaltbreite aufweist, wobei diese Spaltbreite vorteilhafterweise sehr klein gehalten werden kann, vorzugsweise in einem Bereich von 0,05 bis 0,2 mm liegt, vorzugsweise bei etwa 0,1 mm. Diese geringe Spaltbreite hat zur Folge, dass im Bereich zwischen der Stirnseite des Zellenrotors und der Stirnseite des Heissgasgehäuses kaum oder ein nur geringer Druckverlust entsteht. Ein derartiger Druckwellenlader 1 weist beispielsweise gute Kaltstarteigenschaften auf, da der Ladedruck auch bei kaltem Motor sehr schnell aufgebaut werden kann.

In einer vorteilhaften Ausgestaltung ist die Rotorwelle des Zellenrotors nur einseitig im Kaltgasgehäuse durch ein erstes Lager gelagert. Eine derartige Anordnung wird auch als fliegende Lagerung des Zellenrotors bezeichnet. In einer weiteren vorteilhaften Ausgestaltung ist die Rotorwelle beidseits gelagert, sowohl im Kaltgasgehäuse als auch durch ein zweites Lager im Heissgasgehäuse.

In einer weiteren vorteilhaften Ausgestaltung besteht der Zellenrotor aus einer Vielzahl von in Längsrichtung nacheinander folgend angeordneten Zellenrotorteilen, beispielsweise im Bereich von 3 bis 30 Zellenrotorteilen, wobei benachbart angeordneten Zellenrotorteile vorzugsweise über einen Spalt gegenseitig beabstandet sind. Der Spalt kann jedoch auch derart schmal ausgestaltet sein, dass sich benachbart angeordnete Zellenrotorteile, inbesondere im heissen Zustand, gegenseitig berühren. Das erste, dem Heissgasgehäuse zugewandte Zellenrotorteil besteht aus einem warmfesten Metall, vorzugsweise einem hitzebeständigen Stahl. Die danach nachfolgenden Zellenrotorteile erfordern nicht mehr eine derart hohe Warmfestigkeit, sodass diese Zellenrotorteile beispielsweise auch aus einem Kunststoff bestehen könnten.

In einer weiteren vorteilhaften Ausgestaltung umfasst der Druckwellenlader einen Wärmetaucher, der derart angeordnet und ausgestaltet ist, dass dieser zumindest das im Heissgasgehäuse angeordnete zweite Lager für den Zellenrotor kühlt. In einer besonders vorteilhaften Ausgestaltung wird im Heissgasgehäuse zudem der vom Verbrennungsmotor zuströmende Hochdruckabgasstrom kühlt. Die Kühlung des zuströmenden Abgasstroms im Heissgasgehäuse hat zur Folge, dass das Heissgasgehäuse eine tiefere Temperatur aufweist, und dass der Abgasstrom mit einer tieferen Temperatur in den Zellenrotor einströmt, sodass auch der Zellenrotor eine tiefere Betriebstemperatur aufweist. Dies hat zur Folge, dass sowohl das Heissgasgehäuse als auch der Zellenrotor während dem Erwärmen eine geringere Ausdehnung erfährt, beziehungsweise während dem Abkühlen ein geringeres Zusammenziehen aufweist. Die Kühlung ermöglich es ein zweites Lager für den Zellenrotor im Heissgasgehäuse anzuordnen. Dadurch ist es möglich den Zellenrotor im zweiten Lager zu lagern, sodass die Stirnseite des Zellenrotors eine definierte Lage aufweist, und dadurch der Spalt zwischen der Stirnseite des Zellenrotors und der Stirnseite des Heissgasgehäuses klein gehalten werden kann. In der vorteilhaftesten Ausgestaltung ist der Zellenrotor beidseitig gelagert, in einem zweiten Lager im Heissgasgehäuse, und in einem ersten Lager im Kaltgasgehäuse. In einer vorteilhaften Ausgestaltung sind das erste Lager und/oder das zweite Lager zudem geschmiert, insbesondere ölgeschmiert oder fettgeschmiert. Die beidseitige Lagerung des Zellenrotors ermöglicht eine Abkehr von der bisher bekannten fliegenden Lagerung des Zellenrotors, welche den Nachteil hatte, dass sich eine trompetenförmige Verformung des Rotors bei hohen Temperaturen und Drehzahlen ergab.

Der erfindungsgemässe Druckwellenlader weist den Vorteil auf, dass keine oder kaum eine trompetenförmige Verformung des Zellenrotors mehr auftritt. Der erfindungsgemässe Druckwellenlader weist den Vorteil auf, dass das Kaltspiel zwischen Zellenrotor und Heissgasgehäuse äusserst klein gehalten werden kann, und die Spaltbreite vorzugsweise in einem Bereich von 0,05 bis 0,2 mm liegt, vorzugsweise bei etwa 0,1 mm. Der erfindungsgemässe Druckwellenlader weist auf Grund dieser geringen Spaltbreite den Vorteil auf, dass die Kaltstarteigenschaften wesentlich verbessert sind, da der Druckwellenlader auf Grund der geringen Spaltbreite bereits während der Kaltstartphase einen genügend hohen Ladedruck erzeugen kann. Der erfindungsgemässe Druckwellenlader erzeugt bereits bei einer Temperatur im Bereich von beispielsweise etwa 200 °C einen genügend hohen Ladedruck.

In einer vorteilhaften Ausgestaltung wird die Kühlleistung des Wärmetauschers derart geregelt, dass während dem Kaltstart nur mit einer geringen Kühlleistung oder gar nicht gekühlt wird, damit der Druckwellenlader in möglichst kurzer Zeit auf die erforderliche Betriebstemperatur von beispielsweise etwa 200°C gelangt. Die Kühlleistung wird ab einer gewissen Betriebstemperatur, beispielsweise ab 300°C, erhöht, um das einströmende Abgas zu kühlen.

In einer besonders vorteilhaften Ausgestaltung ist der Wärmetauscher zudem derart ausgestaltet, dass dieser auch den aus dem Druckwellenlader ausströmenden Abgasstrom kühlt, vorzugsweise indem der Niederdruckabgaskanal gekühlt wird.

Der erfindungsgemässe Druckwellenlader weist den weiteren Vorteil auf, dass eine Nachentzündung unverbrannter Kohlenwasserstoffe in der Auspuffanlage nicht oder kaum mehr auftritt, da die Temperatur des der Auspuffanlage zugeleiteten Abgasstroms und vorzugsweise auch die Temperatur des Heissgasgehäuses deutlich reduziert ist. So kann der das Heissgasgehäuse verlassende Abgasstrom beispielweise eine Temperatur von etwa 700 °C oder eine Temperatur von unter 700 °C aufweisen. Das Heissgasgehäuse kann an der Oberfläche beispielsweise eine Temperatur von etwa 120 °C aufweisen. Vorteilhafterweise ist der Wärmetauscher als im Heissgasgehäuse verlaufende Kanäle ausgestaltet, durch welche als Kühlmedium Wasser fliesst. Ein derart ausgestalteter Wärmetauscher ist besonders geeignet das Heissgasgehäuse zu kühlen, sodass es beispielsweise möglich ist das Heissgasgehäuse aus Aluminium, einer Aluminiumlegierung oder einer Leichtmetalllegierung zu bilden. Ein Heissgasgehäuse gefertigt aus einem derartigen Metall nimmt während dem Betrieb keinen thermischen Schaden, da das Metall eine hohe Wärmeleitung aufweist, und das Heissgasgehäuse derart gekühlt wird, dass keine Überhitzung auftritt.

Der erfindungsgemässe Druckwellenlader weist zudem den Vorteil auf, dass durch die Kühlung des Abgasstroms der Volumenstrom des Abgases reduziert wird, was zur Folge hat, dass entweder die Dimension der Abgasleitungen im Druckwellenlader reduziert werden kann, oder dass ein bestehender Druckwellenlader mit erhöhter Abgasförderkapazität betrieben werden kann.

Der erfindungsgemässe Druckwellenlader weist zudem den Vorteil auf, dass dieser mit weniger temperaturfesten Werkstoffen und somit mit günstigeren Werkstoffen ausgebildet werden kann, insbesondere das Heissgasgehäuse und das Kaltgasgehäuse, jedoch auch der Zellenrotor. In einer besonders vorteilhaften Ausgestaltung wird zumindest das Heissgasgehäuse aus Aluminium, einer Aluminiumlegierung oder einer sonstigen Leichtmetalllegierung ausgestaltet, um ein gewichtsmässig leichteres Heissgasgehäuse auszubilden, und um vorzugsweise ein Heissgasgehäuse mit erhöhter Wärmeleitfähigkeit auszubilden. Ein derartiger Druckwellenlader weist den Vorteil auf, dass dieser besonders leicht ausgestaltet ist, und dass der Abgasstrom besonders effizient gekühlt werden kann. Ein Heissgasgehäuse aus Aluminium oder einer entsprechenden Legierung weist den Vorteil auf, dass dieses sich sehr schnell erwärmt, sodass der Druckwellenlader bei einem Kaltstart in sehr kurzer Zeit die erforderliche Betriebstemperatur aufweist. Ein Verbrennungsmotor ausgerüstet mit einem erfindungsgemässen Druckwellenlader weist somit vorteilhafte Kaltstarteigenschaften auf. Dies hat zur Folge, dass der Druckwellenlader, beispielsweise bei einem Benzinmotor mit kleinem Hubraum, sehr schnell nach dem Kaltstart Wirkung zeigt, was beispielsweise ein besseres Beschleunigungsverhalten und eine geringere Schadstoffemission zur Folge hat.

Der Wärmetauscher umfasst vorteilhafterweise eine Wasserkühlung, insbesondere derart, dass im Heissgasgehäuse Kühlkanäle angeordnet sind, welche vom Kühlwasser durchströmt sind.

Der Zellenrotor ist vorteilhafterweise aktiv angetrieben, beispielsweise durch einen Riemenantrieb, oder insbesondere durch einen Elektromotor, der vorteilhafterweise im Kaltgasgehäuse angeordnet ist.

### Kurze Beschreibung der Zeichnungen

Die zur Erläuterung der Ausführungsbeispiele verwendeten Zeichnungen zeigen:
- Fig. 1: einen Längsschnitt durch einen teilweise schematisch dargestellten Druckwellenlader;
- Fig. 2: eine Prinzipdarstellung der Gasführung im Zellenrotor;
- Fig. 3: eine Seitenansicht eines geteilten Zellenrotors;
- Fig. 4: einen Längsschnitt durch einen geteilten Zellenrotor;
- Fig. 5: einen Längsschnitt durch ein weiteres Ausführungsbeispiel eines geteilten Zellenrotors;
- Fig. 6: einen Längsschnitt durch ein weiteres Ausführungsbeispiel eines geteilten Zellenrotors;
- Fig. 7: einen Längsschnitt durch ein weiteres Ausführungsbeispiel eines teilweise schematisch dargestellten Druckwellenladers;
- Fig. 8: eine Frontansicht eines Heissgasgehäuses;
- Fig. 9: eine Seitenansicht eines Druckwellenladers;
- Fig. 10: einen Schnitt durch den Druckwellenlader entlang der Schnittlinie A-A gemäss Figur 9;
- Fig. 11: einen Längsschnitt durch ein weiteres Ausführungsbeispiel eines Druckwellenladers;
- Fig. 12: eine perspektivische Ansicht der Vorderseite eines Zellenrotors;
- Fig. 13: eine perspektivische Ansicht der Rückseite eines Zellenrotors;
- Fig. 14: einen Längsschnitt durch ein weiteres Ausführungsbeispiel eines geteilten Zellenrotors.

Grundsätzlich sind in den Zeichnungen gleiche Teile mit gleichen Bezugszeichen versehen.

### Wege zur Ausführung der Erfindung

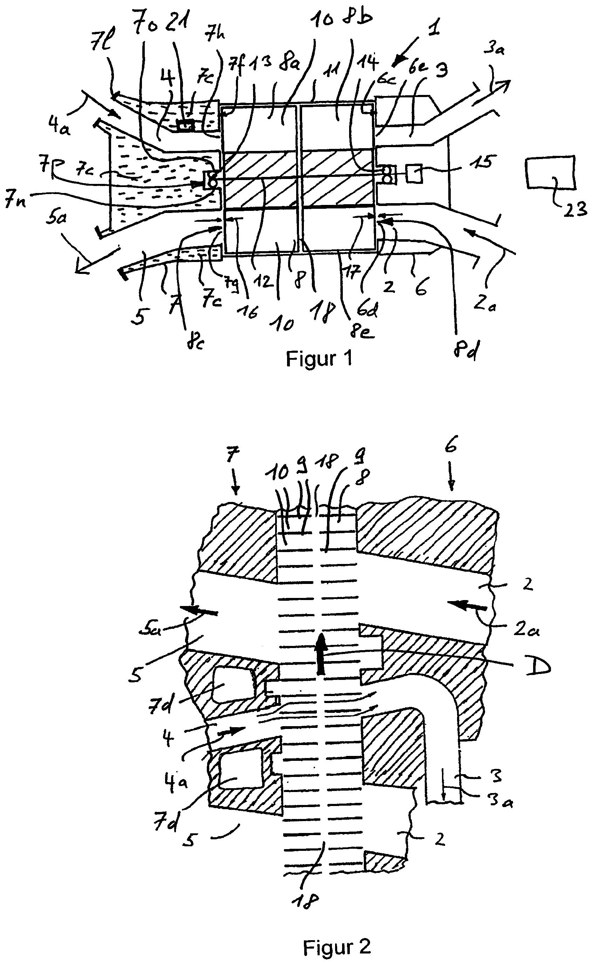

Figur 1 zeigt teilweise schematisch einen Druckwellenlader 1 zum Verdichten von Frischluft 2a für einen nicht dargestellten Verbrennungsmotor, dem eine verdichtete Frischluft, auch als Ladeluft 3a bezeichnet, zugeführt wird. Der Druckwellenlader 1 umfasst ein Kaltgasgehäuse 6, ein Heissgasgehäuse 7 sowie ein dazwischen angeordnetes Rotorgehäuse 11, wobei innerhalb des Rotorgehäuses 11 ein rotierbarer Zellenrotor 8 angeordnet ist. Der Zellenrotor 8 umfasst ein erstes und ein zweites Zellenrotorteil 8a, 8b, welche unter Ausbildung eines Spaltes 18 gegenseitig beabstandet sind. Der Zellenrotor 8 umfasst eine Rotorwelle 12 oder ist mit einer Rotorwelle 12 verbunden, welche an beiden Enden in je einem zweiten beziehungsweise einem ersten Lager 13,14 drehbar gelagert ist. Das zweite Lager 13 ist im Heissgasgehäuse 7 angeordnet, wogegen das erste Lager 14 im Kaltgasgehäuse 6 angeordnet ist. Das Heissgasgehäuse 7 umfasst einen Hochdruckabgaskanal 4 und einen Niederdruckabgaskanal 5, wobei der vom Motor einströmende Hochdruckabgasstrom 4a dem Hockdruckabgaskanal 4 zugeführt wird, und wobei der aus dem Niederdruckabgaskanal 5 ausströmende Niederdruckabgasstrom 5a einem Auspuff zugeleitet wird. Das Kaltgasgehäuse 6 umfasst einen Frischluftkanal 2 und einen Ladeluftkanal 3. Das Kaltgasgehäuse 6 könnte in einer weiteren Ausführungsform auch mehrere Frischluftkanäle 2 und mehrere Ladeluftkanäle 3 umfassen, vorzugsweise je zwei. Das Heissgasgehäuse 7 könnte in einer weiteren Ausführungsform auch mehrere Hochdruckabgaskanäle 4 und mehrere Niederdruckabgaskanäle 5 umfassen, vorzugsweise je zwei. Der Hochdruckabgaskanal 4, der Niederdruckabgaskanal 5, der Frischluftkanal 2 und der Ladeluftkanal 3 sind in der für einen Druckwellenlader üblich, jedoch nur schematisch dargestellten Anordnung Fluid leitend mit dem Zellenrotor 8 verbunden ist, wobei der Zellenrotor 8 Rotorzellen 10 aufweist, welche eine in Verlaufsrichtung des Zellenrotors 8 durchgehende, Fluid leitende Verbindung ausbildet, welche von der ersten Stirnseite 8c bis zur zweiten Stirnseite 8d des Zellenrotors 8 verläuft, um die angesaugte Frischluft 2a mit Hilfe des Hochdruckabgasstroms 4a zu verdichten und als Ladeluft 3a dem Verbrennungsmotor zuzuführen. Das Heissgasgehäuse 7 weist an der zum Zellenrotor 8 hin ausgerichteten Stirnseite 7f eine Einlassöffnung 7h sowie eine Auslassöffnung 7g auf. Zwischen dieser Stirnseite 7f und dem Zellenrotor 8 besteht ein Spalt 16. Der Spalt 16 weist vorzugsweise eine Breite im Bereich von 0,05 bis 0,2 mm auf, und insbesondere eine Breite von etwa 0,1 mm. Das Kaltgasgehäuse 6 weist an der zum Zellenrotor 8 hin ausgerichteten Stirnseite 6c eine Einlassöffnung 6d sowie eine Auslassöffnung 6e auf. Zwischen dieser Stirnseite 6c und dem Zellenrotor 8 besteht ein Spalt 17. Der Zellenrotor 8 weist eine Zellenrotoraussenwand 8e auf, welche die Rotorzellen 10 begrenzt.

Das Heissgasgehäuse 7 umfasst einen teilweise schematisch dargestellten Wärmetauscher 7c, wobei der Wärmetauscher 7c derart ausgestaltet ist, dass zumindest das zweite Lager 13 gekühlt wird. Vorteilhafterweise umfasst das Heissgasgehäuse 7 eine Lagersitzwand 7n, welche auf der dem zweiten Lager 13 zugewandten Seite als ein Lagersitz 7o für das zweite Lager 13 ausgestaltet ist, wobei das zweite Lager 13 im Lagersitz 7o angeordnet ist, und wobei die Lagersitzwand 7n auf der dem zweiten Lager 13 abgewandten Seite Teil einer Kühlkanalaussenwand 7p eines Kühlkanals 7d des Wärmetauschers 7c bildet.

Besonders vorteilhaft ist der Wärmetauscher 7c derart ausgestaltet, dass auch der Hochdruckabgaskanal 4 kühlbar ist, und somit der durch den Hochdruckabgaskanal 4 strömende Hochdruckabgasstrom 4a gekühlt wird. Vorteilhafterweise umfasst der Wärmetauscher 7c einen Kühlkanal 7e, welcher den Hochdruckabgaskanal 4 zumindest entlang eines Kühlabschnittes 4b vollständig umschliesst, sodass die Aussenwand des Hochdruckabgaskanals 4 zugleich ein Teil der Kühlkanalaussenwand 7p bildet.

Der Kühlstrom ist vorzugsweise derart im Wärmetauscher 7c geleitet, dass das Kühlmittel zuerst das zweite Lager 13 kühlt und danach dem Hochdruckabgaskanal 4 zugeleitet wird um diesen zu kühlen. Das Kühlmittel fliesst vorzugsweise in Kühlkanälen, die sich in der Aussenwand des Hochdruckabgaskanals 4 befinden. In einer weitere vorteilhaften Ausgestaltung ist der Wärmetauscher 7c derart ausgestaltet, dass zudem auch der Niederdruckabgaskanal 5 kühlbar ist, sodass der durch diesen Kanal strömende Niederdruckabgasstrom 5a gekühlt wird. Als Kühlmittel wird vorzugsweise Wasser verwendet. In einer vorteilhaften Ausgestaltung sind die Kühlkanäle mit dem Wasserkreislauf eines Verbrennungsmotors verbunden, sodass dieser das Kühlwasser liefert und die Umwälzung bewirkt. Die Rotorwelle 12 ist im dargestellten Ausführungsbeispiel von einem im Kaltgasgehäuse 6 angeordneten Elektromotor 15 angetrieben. Die Rotorwelle 12 könnte beispielsweise auch von einem Riemenantrieb angetrieben sein.

In einer vorteilhaften Ausgestaltung ist im Druckwellenlader 1 ein Sensor 21 angeordnet zur Erfassung der Temperatur des Hochdruckabgasstroms 4a, der Temperatur des Niederdruckabgasstroms 5a, oder einer damit zusammenhängenden Grösse, wobei der Sensor 21 Signal übertragend mit einer Regelvorrichtung 23 verbunden ist. Der Wärmetauscher 7c ist Fluid leitend mit einer nicht dargestellten Wärmeabgabevorrichtung verbunden, sodass ein Wasserkreislauf ausgebildet wird, der auch eine nicht dargestellte Umwälzpumpe umfasst. In einer bevorzugten Ausgestaltung ist die Umwälzpumpe von der Regelvorrichtung 23 ansteuerbar, sodass die Kühlleistung des Wärmetauschers 7c ansteuerbar ist, vorzugsweise in Abhängigkeit einer vom Sensor 21 gemessenen Temperatur.

In einem vorteilhaften Verfahren erfolgt während eines Kaltstartes keine oder nur eine reduzierte Kühlung des Wärmetauschers 7c, sodass während einer ersten Startphase S1 keine oder eine nur reduzierte Kühlung erfolgt, bis der Druckwellenlader 1, insbesondere der Hochdruckabgasstrom oder der Niederdruckabgasstrom eine Minimaltemperatur Tₘᵢₙ aufweist, und dass die Kühlleistung des Wärmetauschers 7c danach erhöht wird. Dieses Verfahren weist den Vorteil auf, dass der Druckwellenlader während dem Kaltstart schnell erwärmt wird, und deshalb schnell die erforderliche Druckleistung erbringt. In einem weiteren vorteilhaften Verfahren wird die Kühlleistung des Wärmetauschers bei einem Kaltstart während einer vorgegebenen Startzeitdauer Tₛₜ reduziert oder der Wärmetauscher 7c wird ausgeschaltet, und die Kühlleistung des Wärmetauschers 7c wird nach Ablauf der Startzeitdauer Tₛₜ erhöht.

Figur 2 zeigt in einer Prinzipdarstellung die Gasführung in einem Druckwellenlader 1 mit geteiltem Zellenrotor 8 aufweisend den Spalt 18. Der Zellenrotor 8 ist in Drehrichtung D drehbar gelagert. Der Zellenrotor 8 umfasst eine Mehrzahl von in Drehrichtung D beabstandet angeordneten Zellenwänden 9, welche Rotorzellen 10 begrenzen. Der Zellenrotor 8 beziehungsweise die Rotorzellen 10 sind in der Mitte durch den Spalt 18 unterbrochen und enden, wie in Figur 1 dargestellt, in Verlaufsrichtung an einer ersten beziehungsweise an einer zweiten Stirnseite 8c, 8d. Die Rotorzellen 10 sind im Bereich des Spaltes 18 gegenseitig fluchtend angeordnet, und die Rotorzellen 10 sind in Verlaufsrichtung des Zellenrotors 8 beziehungsweise der Rotorwelle 12 durchgehend ausgestaltet, um eine in Verlaufsrichtung des Zellenrotors 8 bzw. der Rotorwelle 12 durchgehende, unbehinderte Fluid leitende Verbindung zwischen der ersten und zweiten Stirnseite 8c, 8d auszubilden, damit sich die Druckwelle ungehindert durch die Rotorzellen 10 fortpflanzen kann. In dem rotierenden Zellenrotor 8 strömen durch den Frischluftkanal 2 angesaugte Frischluft 2a und durch den Hochdruckabgaskanal 4 das von dem Verbrennungstakt kommende Abgas 4a. Die angesaugte Frischluft 2a wird von dem Druck des Abgases 4a komprimiert und anschließend über den Ladeluftkanal 3 dem Verbrennungsmotor auf einer Ansaugseite zugeführt, und strömt dann in den Zylinder in dem ein Ladungswechselvorgang stattfindet, und wird dort mit Kraftstoff vermengt und verbrannt. Im Anschluss daran wird das Abgas 4a durch den Hochdruckabgaskanal 4 dem Druckwellenlader 1 wiederum zugeführt. Nach der Verdichtung der Frischluft 2a durch das Abgas 4a wird das nicht mehr benötigte Abgas 5a vom Zellenrotor 8 in einen Niederdruckabgaskanal 5 entlassen und dem weiteren Abgasstrang zugeführt.

Im Heissgasgehäuse 7 verläuft ein Hochdruckabgaskanal 4, welcher dem Zellenrotor 8 zugeführt ist. Im Heissgasgehäuse 7 ist zudem ein Wärmetauscher 7c angeordnet, der im dargestellten Ausführungsbeispiel als Wasserkanäle 7d ausgestaltet ist, welche den Hochdruckabgaskanal 4 umgeben um dessen Innenwände zu kühlen und um dadurch den durchströmenden Hochdruckabgasstrom 4a zu kühlen. Im dargestellten Ausführungsbeispiel ist der Wärmetauscher 7c beziehungsweise die Wasserkanäle 7d Teil des Heissgasgehäuses 7. In einer bevorzugten, nicht dargestellten Ausgestaltung sind die Wasserkanäle 7d zuerst demjenigen Bereich des Heissgasgehäuses 7 zugeleitet, in welchem das zweite Lager 13 angeordnet ist, um zuerst das zweite Lager 13 zu kühlen, bevor derjenige Teil des Heissgasgehäuses 7 gekühlt wird, welcher den Hochdruckabgaskanal 4 umschliesst. In einer vorteilhaften, nicht dargestellten Ausführungsform, könnten auch im Bereich des Niederdruckabgaskanals 5 ein Wärmetauscher 7c, insbesondere Wasserkanäle 7d angeordnet sein, um den Niederdruckabgasstrom 5a zu kühlen.

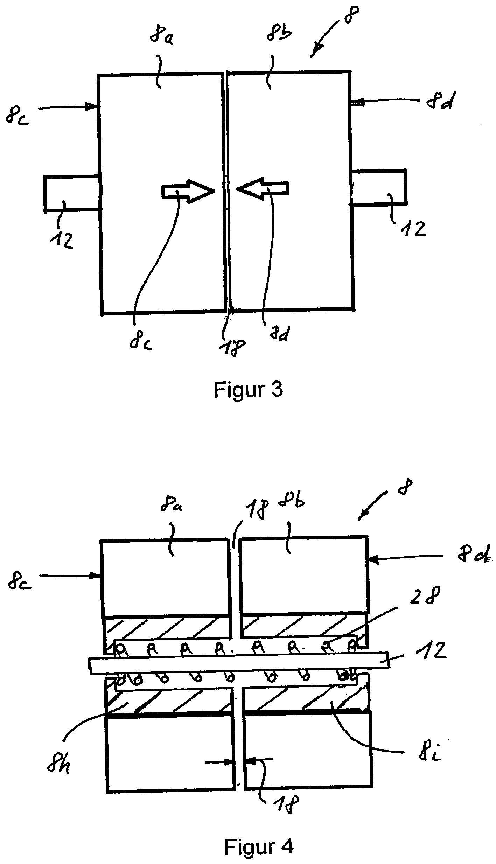

Figur 3 zeigt eine Seitenansicht eines geteilten Zellenrotors 8, der in Verlaufsrichtung der Rotorwelle 12 zweiteilig ausgestaltet ist und ein erstes Zellenrotorteil 8a und ein zweites Zellenrotorteil 8b aufweist. Die Zellenrotorteile 8a, 8b sind derart mit der Rotorwelle 12 verbunden, dass diese bei einer Erwärmung nur zur Mitte hin eine Ausdehnungsbewegung 8c, 8d aufweisen, sodass sich die Spaltbreite 18 reduziert. Vorzugsweise verändert sich die Lage der Zellenrotorteile 8a, 8b bezüglich der Rotorwelle 12 zur Stirnseite 8c, 8d des Zellenrotors 8 nicht, sodass eine konstante oder im Wesentlichen konstante Spaltbreite 16, 17 zwischen der Stirnfläche 7f des Heissgasgehäuses 7, und dem Zellenrotor 8 gewährleistet ist.

Figur 4 zeigt einen Zellenrotor 8 umfassend ein erstes Zellenrotorteil 8a mit einem ersten Lagerteil 8h und ein zweites Zellenrotorteil 8b mit einem zweiten Lagerteil 8i, wobei die beiden Zellenrotorteile 8a, 8b beziehungsweise die beiden Lagerteile 8h, 8i einen gegenseitigen Spalt 18 ausbilden. Die Lagerteile 8h, 8i sind bezüglich der Rotorwelle 12 verschiebbar gelagert. Die Lagerteile 8h, 8i weisen eine Ausnehmung auf, innerhalb welcher eine gespannte Feder 28 angeordnet ist, welche die beiden Lagerteile 8h, 8i und damit die beiden Zellenrotorteile 8a, 8b voneinander wegdrückt, sodass die Zellenrotorteile 8a, 8b mit deren Stirnseiten an der Stirnseite 7f des Heissgasgehäuses 7 beziehungsweise an der Stirnseite 6c des Kaltgasgehäuses 6 beinahe anliegt, sodass sich dazwischen nur ein geringer Spalt 16 ausbildet. Eine Erwärmung des Zellenrotors 8 hat zur Folge, dass sich die Zellenrotorteile 8a, 8b ausdehnen, sodass sich der Spalt 18 verkleinert. Eine Abkühlung des Zellenrotors 8 hat zur Folge, dass sich der Spalt 18 vergrössert. Die in Figur 4 dargestellte Ausführungsform weist den Vorteil auf, dass der Spalt 16 zwischen der Stirnseite 7f des Heissgasgehäuses 7 und dem ersten Zellenrotorteil 8a konstant oder im Wesentlichen konstant bleibt, unabhängig von der Temperatur des Zellenrotorteils 8a, da die sich auf Grund der Erwärmung ergebende Änderung der Länge des Zellenrotorteils 8a bezüglich der Breite des Spaltes 18 auswirkt.

In einer vorteilhaften Ausgestaltung besteht das erste Zellenrotorteil 8a aus einem wärmefesteren Material als das zweite Zellenrotorteil 8b, beispielweise aus Stahl oder Eisenguss. Während dem Betrieb den Druckwellenladers 1 könnte das erste Zellenrotorteil 8a beispielsweise eine Temperatur von etwa 800 °C aufweisen, wogegen das zweite Zellenrotorteil 8b eine Temperatur von nur etwa 200°C aufweist. Der Spalt 18 verhindert eine durchgehende Wärmeleitung in Verlaufsrichtung des Zellenrotors 8, sodass die Zellenrotorteile 8a, 8b stark unterschiedliche Temperaturen aufweisen können. Daher ist es auch möglich das zweite Zellenrotorteil 8b aus einem reduziert wärmefesten Material zu fertigen, beispielsweise auch aus einem Kunststoff. Ein derartiger Zellenrotor 18 ist kostengünstiger und vorzugsweise auch leichter.

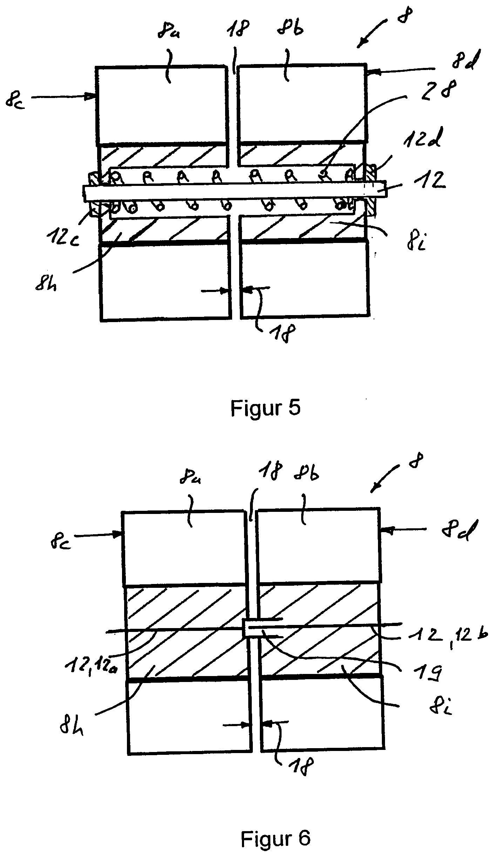

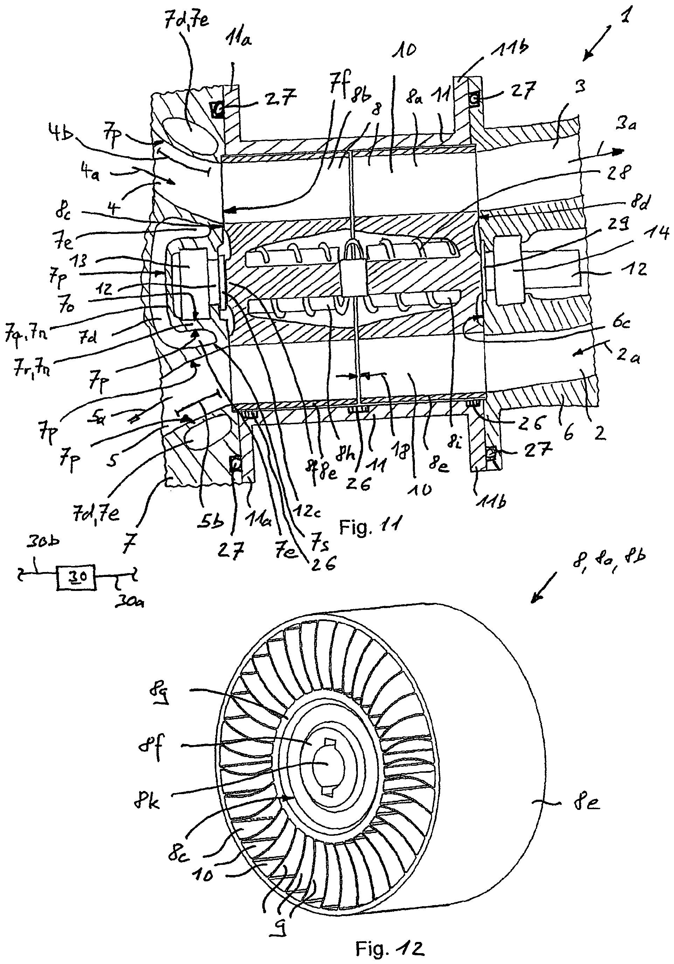

Figur 5 zeigt ein weiteres Ausführungsbeispiel eines Zellenrotors 8, wobei dieser im Unterschied zu dem in Figur 4 dargestellten Ausführungsbeispiel Anschläge 12c, 12d aufweist, welche fest mit dem Rotor 12 verbunden sind, sodass der maximal mögliche Verschiebungsweg der beiden Zellenrotorteile 8a, 8b in Verlaufsrichtung des Rotor 12 durch die Anschläge 12c, 12d begrenzt ist. Die beiden Zellenrotorteile 8a, 8b könnten in einem möglichen Ausführungsbeispiel zum Spaltes 18 hin Endabschnitte aufweisen, die sich in Verlaufsrichtung des Rotors 12 gegenseitig überlappen und dadurch eine Dichtung ausbilden. Diese Dichtung könnte beispielsweise als eine Labyrinthdichtung ausgestaltet sein. Alle hierin dargestellten Ausführungsbeispiele von Zellenrotoren 8 könnten derart ausgestaltet sein. Als Alternative könnte, wie in Figur 11 dargestellt, im Rotorgehäuse 11 eine Dichtung, insbesondere eine Labyrinthdichtung 26 angeordnet sein.

Figur 6 zeigt ein weiteres Ausführungsbeispiel eines Zellenrotors 8, der in Verlaufsrichtung der Rotorwelle 12 zumindest zweiteilig ausgestaltet ist und ein erstes Zellenrotorteil 8a mit einer ersten Rotorteilwelle 12a und ein zweites Zellenrotorteil 8b mit einer zweiten Rotorteilwelle 12b umfasst, wobei die beiden Zellenrotorteile 8a, 8b beziehungsweise die beiden Rotorteilwellen 12a, 12b über eine Kupplung 19 miteinander verbunden sind. Die beiden Zellenrotorteile 8a, 8b weisen einen Rotorspalt 18 auf. Die beiden Rotorteilwellen 12a, 12b sind in der Kupplung 19 gegenseitig verschiebbar gelagert, sodass eine Temperaturveränderung des Zellenrotors 8 eine Veränderung der Spaltbreite 18 zur Folge haben kann.

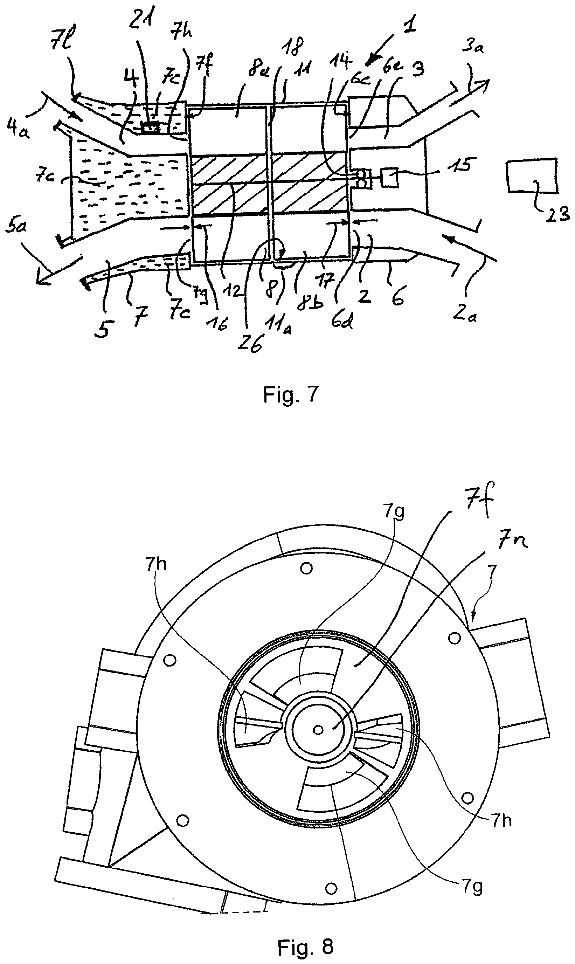

Figur 7 zeigt ein Ausführungsbeispiel eines Druckwellenladers 1 mit einem fliegend gelagerten Zellenrotor 8. Im Unterschied zu dem in Figur 1 dargestellten Druckwellenlader 1 ist bei dem in Figur 7 dargestellten Druckwellenlader die Rotorwelle 12 nur rechts im ersten Lager 14 im Kaltgasgehäuse 6 gelagert. Die Rotorwelle 12 ist am linken Ende nicht gelagert.

Der Druckwellenlader 1 könnte auch derart ausgestaltet sein, dass das zweite Zellenrotorteil 8b sowie ein das zweite Zellenrotorteil 8b umschliessender Abschnitt 11a des Rotorgehäuses 11 derart gegenseitig angepasst ausgestaltet sind, dass das zweite Zellenrotorteil 8b sowie der umschliessende Abschnitt 11a gegenseitig eine Labyrinthdichtung 26 ausbilden, wie in Figur 11 dargestellt.

In einer weiteren möglichen Ausführungsform könnte in den in den Figuren 1, 7 und 11 dargestellten Druckwellenladern 1 auf eine Kühlung des Heissgasgehäuses 7 verzichtet werden. Auch bei einer solchen Ausführungsform ist gewährleistet, dass der Spalt 16 klein gehalten werden kann, und eine Erwärmung des Zellenrotors 8 eine Veränderung der Rotorspaltbreite 18 zur Folge hat.

Figur 8 zeigt die Stirnseite 7f eines Heissgasgehäuses 7, wobei an der Stirnseite 7f, in Umfangsrichtung beabstandet, nacheinander folgend eine Einlassöffnung 7h und nachfolgend eine Auslassöffnung 7g angeordnet ist, wobei nachfolgend nochmals eine Einlassöffnung 7h und nachfolgend eine Auslassöffnung 7g angeordnet sind. Ein Druckwellenlader 1 umfassend das in Figur 5 dargestellte Heissgasgehäuse 7 ist derart ausgestaltet, dass dieser eine Gasführung aufweist, welche aus zwei übereinander angeordneten Gasführungen besteht, wie diese in Figur 2 dargestellt ist.

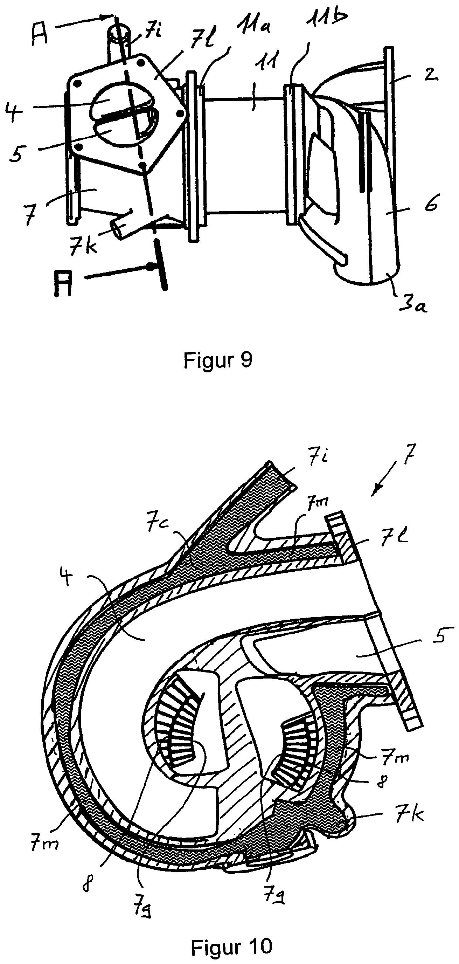

Figur 9 zeigt in einer Seitenansicht ein weiteres Ausführungsbeispiel eines Druckwellenladers 1 mit Heissgasgehäuse 7, Rotorgehäuse 11 und Kaltgasgehäuse 6, wobei das Heissgasgehäuse 7 einen Flansch 71 umfasst, an dem der Hochdruckabgaskanal 4 und der Niederdruckabgaskanal 5 mündet. Das Rotorgehäuse 11 weist zwei Flansche 11a, 11b auf, welche am Heissgasgehäuse 7 beziehungsweise am Kaltgasgehäuse 6 befestigt sind. Zudem ist ein Kühlwassereinlass 7i sowie ein Kühlwasserauslass 7k dargestellt, über welche ein Kühlwasseraustausch mit dem im Heissgasgehäuse 7 angeordneten Wärmetauscher 7c stattfindet.
Figur 10 zeigt einen Schnitt durch Figur 6 entlang der Schnittlinie A-A. Der Hochdruckabgaskanal 4 sowie der Niederdruckabgaskanal 5 sind zumindest teilweise von einem Wassermantel 7m umgeben, der sich innerhalb des Wärmetauschers 7c befindet, wobei das Wasser über die Zu- und Ableitung 7i, 7k ausgetauscht und ausserhalb des Heissgasgehäuses 7 gekühlt wird. Das Heissgasgehäuse 7 ist vorzugsweise abschnittweise doppelwandig ausgestaltet, um zwischen den beabstandeten Wänden den Wärmetauscher 7c auszubilden. Aus Figur 10 sind zudem die zwei Auslassöffnungen 7g sowie ein Teil des dahinter angeordneten Zellenrotors 8 sowie dessen Rotorzellen ersichtlich.
Die Kühlvorrichtung umfassend den Wärmetauscher 7c kann auf unterschiedliche Weise ausgestaltet sein, und könnte zum Beispiel auch als Dampfkreislauf ausgestaltet sein, mit heat pipes und einem Dampfkreislauf mit Phasenveränderung.
Figur 11 zeigt in einem Längsschnitt ein weiteres Ausführungsbeispiel eines Druckwellenladers 1 mit geteiltem, drehbar gelagertem Zellenrotor 8. Das Rotorgehäuse 11 ist als einstückiges, rohrförmiges Mantelgehäuse ausgestaltet, und ist über Flansche 11a, 11b mit dem Heissgasgehäuse 7 sowie dem Kaltgasgehäuse 6 verbunden. Das Heissgasgehäuse 7 ist aus Aluminium oder einer Leichtmetalllegierung gefertigt. Die Rotorwelle 12 ist durchgehend ausgestaltet und im zweiten Lager 13 sowie im ersten Lager 14 drehbar gelagert. Ein Bund beziehungsweise ein Anschlag 12c ist fest mit der Rotorwelle 12 verbunden. Das erste sowie das zweite Zellenrotorteil 8a, 8b sind über Lagerteile 8h, 8i auf der Rotorwelle 12 verschiebbar gelagert. Eine Feder 28 bewirkt eine abstossende Kraft, sodass die beiden Zellenrotorteile 8a, 8b unter einer Vorspannung am Bund 12c beziehungsweise an einer Anschlagscheibe 29 anliegen.

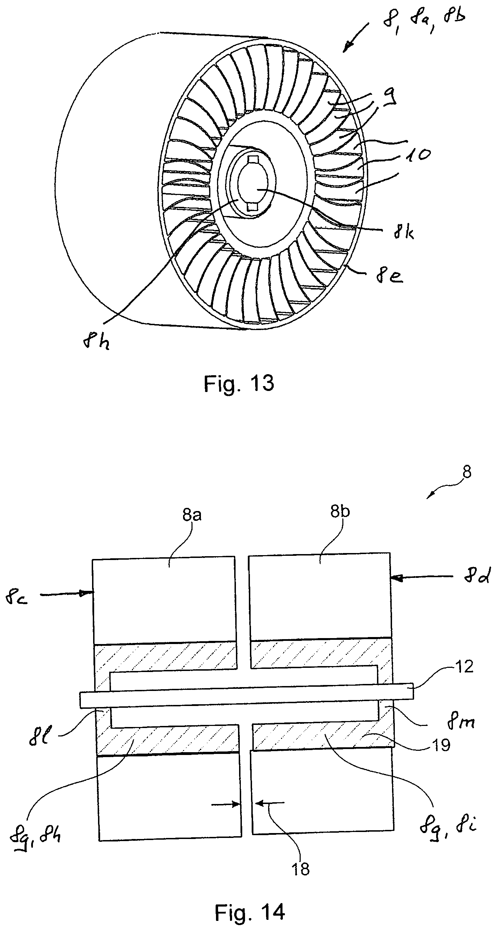

Die Figuren 12 und 13 zeigen in einer perspektivischen Ansicht die Vorderseite bzw. die Rückseite der in Figur 11 dargestellten Zellenrotorteile 8a, 8b. Beide Zellenrotorteile 8a, 8b sind identisch ausgestaltet. Das Zellenrotorteil 8a, 8b umfasst eine Zellenrotoraussenwand 8e, eine Zellenrotorinnenwand 8g sowie eine Vielzahl von Zellenwänden 9, sodass Rotorzellen 10 ausgebildet sind. Das Zellenrotorteil 8a, 8b umfasst zudem eine erste Stirnseite8c umfassend einen Anschlag 8f sowie eine Ausnehmung 8k für die Rotorwelle 12. Das Zellenrotorteil 8a, 8b umfasst zudem ein Lagerteil 8h.

Die beiden Zellenrotorteil 8a, 8b liegen über den Anschlag 8f am Bund 12c beziehungsweise an der Anschlagscheibe 29 an, wobei diese derart angepasst angeordnet sind, dass sich zwischen der ersten Stirnseite 8c des ersten Zellenrotorteils 8a und der Stirnseite 7f des Heissgasgehäuses 7 ein Spalt 16 mit definierter Spaltbreite ergibt, und wobei diese derart angepasst angeordnet sind, dass sich zwischen der zweiten Stirnseite 8d des zweiten Zellenrotorteils 8b und der Stirnseite 6c des Kaltgasgehäuses 6 ein Spalt 17 mit definierter Spaltbreite ergibt. Eine Temperaturveränderung im Druckwellenlader 1 hat somit zur Folge, dass sich die Breite des Rotorspaltes 18 verändert, wogegen die Breite der Spalten 16 und 17 unabhängig von der Temperatur konstant oder im Wesentlichen konstant bleibt. Dies ist mit ein Grund, dass der Druckwellenlader 1 einen hohen Wirkungsgrad aufweist.

Der in Figur 11 dargestellte Druckwellenlader 1 könnte jedoch auch einstückig ausgestaltet sein, das heisst ohne Rotorspalt 18, wie dies zum Beispiel in Figur 1 dargestellt ist.

Der in Figur 11 dargestellte Druckwellenlader 1 umfasst im Heissgasgehäuse 7 einen Wärmetauscher 7c welcher derart ausgestaltet ist, dass zumindest das zweite Lager 13 kühlbar ist, wobei der Wärmetauscher 7c Kühlkanäle 7d aufweist, welche innerhalb des Heissgasgehäuses 7 verlaufen. Das Heissgasgehäuse 7 umfasst eine Lagersitzwand 7n, welche auf der dem zweiten Lager 13 zugewandten Seite als ein Lagersitz 7o für das zweite Lager 13 ausgestaltet ist, wobei das zweite Lager 13 im Lagersitz 7o angeordnet ist, und wobei die Lagersitzwand 7n auf der dem zweiten Lager 13 abgewandten Seite Teil einer Kühlkanalaussenwand 7p eines Kühlkanals 7d des Wärmetauschers 7c bildet. Vorteilhafterweise umfasst die Lagersitzwand 7n eine Stirnseite 7q sowie ausgehend von der Stirnseite 7q einen hohlzylinderförmigen Lagerabschnitt 7r, wobei die Stirnseite 7q und der Lagerabschnitt 7r den Lagersitz 7o ausbildet, und wobei sowohl die Stirnseite 7q als auch der hohlzylinderförmige Lagerabschnitt 7r Teil der Kühlkanalaussenwand 7p bilden. Diese Ausgestaltung ist besonders vorteilhaft, weil ein Wärmefluss vom Heissgasgehäuse 7 zum Lagersitz 7o stark reduziert ist. Vorteilhafterweise wird dadurch ein Wärmeeintrag vom zweiten Lager 13 auf den Zellenrotor 8 verhindert. Besonders vorteilhaft wird der Lagersitz 7o derart stark gekühlt, dass über das zweite Lager 13 Wärme zudem aus dem Zellenrotor 8 abgeführt werden kann. Der Zellenrotor 8 kann derart besonders vorteilhaft gekühlt werden.
Vorteilhafterweise ist die Lagersitzwand 7n über eine Dünnstelle 7s beziehungsweise eine Brücke mit dem restlichen Heissgasgehäuse 7 verbunden, um einen Wärmefluss vom restlichen Heissgasgehäuse auf die Lagersitzwand 7n zu reduzieren.

In einer vorteilhaften Ausgestaltung umfasst der Druckwellenlader 1, falls dieser einen geteilten Rotor 8 aufweist, eine Mehrzahl von Labyrinthdichtungen 26, wie dies beispielhaft und schematisch in Figur 11 dargestellt ist. Die Labyrinthdichtungen 26 sind beispielsweise auf der Innenseite des Rotorgehäuses 11 und auf der Aussenseite der Zellenrotoraussenwand 8e angeordnet, wobei in Figur 11 nur die am Rotorgehäuse 11 angeordneten Labyrinthdichtungen 26 dargestellt sind. Die Labyrinthdichtungen 26 erstrecken sich in Umfangsrichtung um 360°, wobei der Einfachheit halber in Figur 11 die Labyrinthdichtungen 26 nur unten im Rotorgehäuse 11 dargestellt sind. Die Labyrinthdichtungen 26 würden jedoch auch oben im Rotorgehäuse 11 verlaufen. Die Labyrinthdichtung 26 ist vorteilhafterweise zumindest im Bereich des Spaltes 18 angeordnet, um im Bereich zwischen Spalt 18 und Rotorgehäuses 11 ein Austreten des Fluides durch den Spalt 18 aus der Rotorzelle 10 zu vermeiden. Vorteilhafterweise sind zudem noch zwei jeweils in Umfangsrichtung um 360° verlaufende Labyrinthdichtungen 26 in Endbereich des Zellenrotors 8 angeordnet, wie in Figur 11 dargestellt, um ein Eindringen von Fluid in den Spalt zwischen Zellenrotoraussenwand 8e und der Innenseite des Rotorgehäuses 11 zu vermeiden.

Vorteilhafterweise weist der Wärmetauscher 7c einen Kühlkanal 7e auf, welcher den Hochdruckabgaskanal 4 zumindest entlang eines Kühlabschnittes 4b vollständig umschliesst, sodass die Aussenwand des Hochdruckabgaskanals 4 zugleich ein Teil der Kühlkanalaussenwand 7p bildet. Besonders vorteilhaft bildet die Dünnstelle 7s beziehungsweise die Brücke wie in Figur 11 dargestellt beidseitig eine Kühlkanalaussenwand 7p, was einen Wärmefluss vom restlichen Heissgasgehäuse auf die Lagersitzwand 7n zusätzlich reduziert.

Vorteilhafterweise weist der Wärmetauscher 7c zudem einen Kühlkanal 7e auf, welcher den Niederdruckabgaskanal 5 zumindest entlang eines Kühlabschnittes 5b vollständig umschliesst, sodass die Aussenwand des Niederdruckabgaskanals 5 zugleich ein Teil der Kühlkanalaussenwand 7p bildet.

In einer vorteilhaften Ausgestaltung kann zudem ein Ölkreislauf 30 umfassend Ölleitungen 30a vorgesehen sein, um das erste und/oder das zweite Lager 14, 13 mit Öl zu versorgen, wobei in Figur 11 die im dazu erforderlichen, im Heissgasgehäuse 7 und/oder im Kaltgasgehäuse 6 verlaufenden Ölleitungen nicht dargestellt sind.

Die Kühlung des Druckwellenladers 1 hat zur Folge, dass dieser während dem Betrieb eine tiefere Temperatur aufweist. Dies ergibt den Vorteil, dass, wie in Figur 11 dargestellt, zur Dichtung zwischen dem Kaltgehäuse 6 und dem Rotorgehäuse 11 und/oder zwischen dem Heissgasgehäuse 7 und dem Rotorgehäuse 11 Dichtringe 27 beziehungsweise O-Ringe zur Abdichtung verwenden werden können, wobei die Dichtringe 27 aus Metall oder Kunststoff bestehen, vorzugsweise aus einem dauerelastischen Material wie Silikon. Der Dichtring 27 verläuft in Umfangsrichtung um 360 Grad.

Figur 14 zeigt ein weiteres Ausführungsbeispiel eines Zellenrotors 8, der in Verlaufsrichtung der Rotorwelle 12 zweiteilig ausgestaltet ist und ein erstes Zellenrotorteil 8a mit einem ersten Lagerteil 8h und ein zweites Zellenrotorteil 8b mit einem zweiten Lagerteil 8i umfasst, wobei die beiden Zellenrotorteile 8a, 8b beziehungsweise die beiden Lagerteile 8h, 8i einen gegenseitigen Spalt 18 ausbilden, sodass die beiden Zellenrotorteile 8a, 8b unter Ausbildung eines Spaltes 18 gegenseitig beabstandet sind. Die zwischen der ersten und zweiten Stirnseite 8c, 8d durchgehend verlaufenden Rotorzellen 10 sind am Übergang zwischen erstem und zweiten Zellenrotorteil 8a, 8b ebenfalls um den Spalt 18 beabstandet, wobei der Spalt 18 den Fluidfluss in der durchgehend von der ersten zur zweiten Stirnseite 8c, 8d verlaufenden, im Bereich des Spaltes 18 gegenseitig fluchtenden Rotorzelle 10 nicht behindert. Beide Zellenrotorteile 8a, 8b sind über die Rotorwelle 12 miteinander verbunden und drehen in dieselbe Drehrichtung D. Die Lagerteile 8h, 8i sind an deren Endabschnitte 81, 8m fest mit der Rotorwelle 12 verbunden. Eine Erwärmung des Zellenrotors 8 hat zur Folge, dass sich die Zellenrotorteile 8a, 8b ausdehnen, sodass sich der Spalt 18 verkleinert. Eine Abkühlung des Zellenrotors 8 hat zur Folge, dass sich der Spalt 18 vergrössert. Die in Figur 14 dargestellte Ausführungsform weist den Vorteil auf, dass der Spalt 16 zwischen der Stirnseite 7f des Heissgasgehäuses 7 und dem ersten Zellenrotorteil 8a während dem Betrieb des Druckwellenladers 1 konstant oder im Wesentlichen konstant bleibt, unabhängig von der Temperatur des Zellenrotorteils 8a, da die sich auf Grund der Erwärmung ergebende Änderung der Länge des Zellenrotorteils 8a bezüglich der Breite des Spaltes 18 auswirkt. In einer vorteilhaften Ausgestaltung beträgt die Breite des Spaltes 18 im Kaltzustand des Zellenrotors 8 0,4 mm, wobei sich diese Breite während dem Betrieb des Druckwellenladers 1 auf Grund der Erwärmung des Zellenrotors 8 verkleinert auf einen Wert von vorzugsweise unter 0,2mm. In einer besonders vorteilhaften Ausgestaltung schliesst sich der Spalt 18 auf Grund der Erwärmung vollständig. Während einem Abkühlen des Zellenrotors 8 vergrössert sich der Spalt 18 wieder bis zum Kaltzustand.

Die Kühlung des Druckwellenladers 1 hat zur Folge, dass dieser während dem Betrieb eine tiefere Temperatur aufweist. Dies ergibt den Vorteil, dass zur Dichtung zwischen dem Kaltgehäuse 6 und dem Rotorgehäuse 11 und/oder zwischen dem Heissgasgehäuse 7 und dem Rotorgehäuse 11 ein Dichtring 27 zur Abdichtung verwenden werden können, wobei die Dichtringe 27 aus Metall oder Kunststoff bestehen.

Es kann sich zudem als vorteilhaft erweisen einen zusätzlichen Wärmetauscher anzuordnen, um eine Hochdruckabgaszufuhrleitung zu kühlen, wobei die Hochdruckabgaszufuhrleitung im Abgasflussrichtung vorgängig dem Hochdruckabgaskanal 4 angeordnet ist.

Der erfindungsgemässe Zellenrotor 8 ist in den dargestellten Ausführungsbeispielen in Kombination mit einem gekühlten Heissgasgehäuse 7 gezeigt. Der erfindungsgemässe Zellenrotor 8 ist jedoch auch für einen Druckwellenlader 1 geeignet, der kein gekühltes Heissgasgehäuse 7 aufweist.

In einem beispielhaften Verfahren tritt die Abgastemperatur mit etwa 1050°C aus dem Benzinmotor aus, wird im Hochdruckabgaskanal 4 gekühlt, und tritt mit etwa 850°C in den Zellenrotor ein. Der Zellenrotor wird zudem durch die eintretende Frischluft 2a, welche etwa 20°C aufweist, gekühlt, sodass der erste Zellenrotorteil 8a eine Temperatur von etwa 450°C und der zweite Zellenrotorteil 8b eine Temperatur von etwa 200 °C aufweist.

## Patentansprüche

1. Druckwellenlader (1) zum Verdichten von Frischluft (2a) für einen Verbrennungsmotor, umfassend ein Kaltgasgehäuse (6), ein Heissgasgehäuse (7) sowie ein dazwischen angeordnetes Rotorgehäuse (11), wobei innerhalb des Rotorgehäuses (11) ein rotierbarer Zellenrotor (8) angeordnet ist, wobei der Zellenrotor (8) eine Mehrzahl von Rotorzellen (10) aufweist, welche in Verlaufsrichtung des Zellenrotors (8) verlaufen und eine Fluid leitende Verbindung ausbilden, und wobei das Heissgasgehäuse (7) einen Hochdruckabgaskanal (4) und einen Niederdruckabgaskanal (5) umfasst, und wobei das Kaltgasgehäuse (6) einen Frischluftkanal (2) und einen Ladeluftkanal (3) umfasst, und wobei der Hochdruckabgaskanal (4), der Niederdruckabgaskanal (5), der Frischluftkanal (2) und der Ladeluftkanal (3) Fluid leitend mit dem Zellenrotor (8) verbunden sind, wobei das Kaltgasgehäuse (6) ein Zellenrotorlager (14) umfasst, wobei der Zellenrotor (8) mit einer Rotorwelle (12) verbunden ist, wobei die Rotorwelle (12) im Zellenrotorlager (14) gelagert ist, und wobei der Zellenrotor (8) in Verlaufsrichtung der Rotorwelle (12) geteilt ist und zumindest ein erstes Zellenrotorteil (8a) und ein zweites Zellenrotorteil (8b) umfasst, wobei das erste und das zweite Zellenrotorteil (8a, 8b) in Verlaufsrichtung der Rotorwelle (12) gegenseitig beabstandet sind, unter Ausbildung eines Spaltes (18), **dadurch gekennzeichnet, dass** der Spalt (18) offen ist, sodass vom ersten Zellenrotorteil (8a) zum zweiten Zellenrotorteil (8b) in Verlaufsrichtung der Rotorwelle (12) nacheinander folgende Rotorzellen (10) über den offenen Spalt (18) Fluid leitend miteinander verbunden sind.

2. Druckwellenlader nach Anspruch 1, **dadurch gekennzeichnet, dass** der Spalt (18) eine Breite von maximal 0,5 mm aufweist.

3. Druckwellenlader nach einem der vorhergehenden Ansprüche, **dadurch gekennzeichnet, dass** der Zellenrotor (8) in Verlaufsrichtung der Rotorwelle (12) in der Mitte geteilt ist

4. Druckwellenlader nach einem der vorhergehenden Ansprüche, **dadurch gekennzeichnet, dass** das Heissgasgehäuse (7) ein zweites Zellenrotorlager (13) umfasst, und dass die Rotorwelle (12) des Zellenrotors (8) sowohl im ersten Zellenrotorlager (14) im Kaltgehäuse (6) als auch im zweiten Zellenrotorlager (13) im Heissgasgehäuse (7) gelagert ist.

5. Druckwellenlader nach einem der vorhergehenden Ansprüche, **dadurch gekennzeichnet, dass** das erste Zellenrotorteil (8a) und/oder das zweite Zellenrotorteil (8b) fest mit der Rotorwelle (12) verbunden sind.

6. Druckwellenlader nach einem der Ansprüche 1 bis 4, **dadurch gekennzeichnet, dass** das erste Zellenrotorteil (8a) und das zweite Zellenrotorteil (8b) in Verlaufsrichtung der Rotorwelle (12) verschiebbar auf der Rotorwelle (12) angeordnet sind.

7. Druckwellenlader nach einem der vorhergehenden Ansprüche, **dadurch gekennzeichnet, dass** zwischen dem ersten und dem zweiten Zellenrotorteil (8a, 8b) eine Feder (28) angeordnet ist, welche auf die beiden Zellenrotorteile (8a, 8b) eine gegenseitig abstossende Kraft erzeugt.

8. Druckwellenlader nach einem der vorhergehenden Ansprüche, **dadurch gekennzeichnet, dass** ein Anschlag (12c) fest mit der Rotorwelle (12) verbunden ist, an welcher das erste Zellenrotorteil (8a) anschlägt, um eine definierte Spaltebreite (16) zwischen einer Stirnseite (7f) des Heissgasgehäuses (7) und einer ersten Stirnseite (8c) des ersten Zellenrotorteils (8a) zu gewährleisten.

9. Druckwellenlader nach einem der vorhergehenden Ansprüche, **dadurch gekennzeichnet, dass** der Zellenrotor (8) eine Vielzahlzahl von Zellenrotorteilen (8a, 8b) umfasst, welche in Verlaufsrichtung der Rotorwelle (12) nacheinander folgend angeordnet sind, wobei die Vielzahl im Bereich zwischen 3 und 30 liegt.

10. Druckwellenlader nach einem der vorhergehenden Ansprüche, **dadurch gekennzeichnet, dass** das erste Zellenrotorteil (8a) und das zweite Zellenrotorteil (8b) aus einem unterschiedlichen Material sind, wobei das Material des ersten Zellenrotorteils (8a) eine höhere Warmfestigkeit aufweist als das Material des zweiten Zellenrotorteils (8b).

11. Druckwellenlader nach Anspruch 10, **dadurch gekennzeichnet, dass** das erste Zellenrotorteil (8a) aus einem warmfesten, hitzebeständigen Stahl besteht.

12. Druckwellenlader nach Anspruch 10 oder 11, **dadurch gekennzeichnet, dass** das zweite Zellenrotorteil (8b) aus einem Kunststoff besteht.

13. Druckwellenlader nach einem der vorhergehenden Ansprüche, **dadurch gekennzeichnet, dass** das erste Zellenrotorteil (8a) und das zweite Zellenrotorteil (8b) in Verlaufsrichtung der Rotorwelle (12) nacheinander folgend angeordnet sind und eine Übergangsstelle aufweisen, und dass an der Übergangsstelle eine Labyrinthdichtung (26) angeordnet ist.

14. Druckwellenlader nach einem der Ansprüche 1 bis 11, **dadurch gekennzeichnet, dass** das erste Zellenrotorteil (8a) und das zweite Zellenrotorteil (8b) in Verlaufsrichtung der Rotorwelle (12) nacheinander folgend angeordnet sind, und dass das zweite Zellenrotorteil (8b) sowie ein das zweite Zellenrotorteil (8b) umschliessender Abschnitt (11a) des Rotorgehäuses (11) derart gegenseitig angepasst ausgestaltet sind, dass das zweite Zellenrotorteil (8b) sowie der umschliessende Abschnitt (11a) gegenseitig eine Labyrinthdichtung (26) ausbilden.

15. Druckwellenlader nach einem der vorhergehenden Ansprüche, **dadurch gekennzeichnet, dass** das Heissgasgehäuse (7) einen Wärmetauscher (7c) umfasst, und dass der Wärmetauscher (7c) derart ausgestaltet ist, dass der Hochdruckabgaskanal (4) kühlbar ist.

16. Druckwellenlader nach Anspruch 15, **dadurch gekennzeichnet, dass** der Wärmetauscher (7c) derart ausgestaltet ist, dass vorgängig das zweite Zellenrotorlager (13) gekühlt ist und nachfolgend der Hochdruckabgaskanal (4).

## Claims

1. Pressure wave supercharger (1) for compressing fresh air (2a) for an internal combustion engine, comprising a cold gas housing (6), a hot gas housing (7), and a rotor casing (11), which is arranged therebetween, wherein a rotatable cell rotor (8) is arranged within the rotor casing (11), wherein the cell rotor (8) has a plurality of rotors cells (10), which extend in the direction of extent of the cell rotor (8) and form a fluidic connection, and wherein the hot gas housing (7) comprises a high-pressure exhaust duct (4) and a low-pressure exhaust duct (5), and wherein the cold gas housing (6) comprises a fresh air duct (2) and a charge air duct (3), and wherein the high-pressure exhaust duct (4), the low-pressure exhaust duct (5), the fresh air duct (2) and the charge air duct (3) are fluidically connected to the cell rotor (8), wherein the cold gas housing (6) comprises a cell rotor bearing (14), wherein the cell rotor (8) is connected to a rotor shaft (12), wherein the rotor shaft (12) is mounted in the cell rotor bearing (14), and wherein the cell rotor (8) is divided in the direction of extent of the rotor shaft (12) and comprises at least one first cell rotor part (8a) and one second cell rotor part (8b), wherein the first and the second cell rotor part (8a, 8b) are spaced apart in the direction of extent of the rotor shaft (12), forming a gap (18), **characterized in that** the gap (18) is open, with the result that, from the first cell rotor part (8a) to the second cell rotor part (8b), successive rotor cells (10) in the direction of extent of the rotor shaft (12) are fluidically connected to one another via the open gap (18).

2. Pressure wave supercharger according to Claim 1, **characterized in that** the gap (18) has a width of at most 0.5 mm.

3. Pressure wave supercharger according to one of the preceding claims, **characterized in that** the cell rotor (8) is divided in the center in the direction of extent of the rotor shaft (12).

4. Pressure wave supercharger according to one of the preceding claims, **characterized in that** the hot gas housing (7) comprises a second cell rotor bearing (13), and **in that** the rotor shaft (12) of the cell rotor (8) is supported both in the first cell rotor bearing (14) in the cold housing (6) and in the second cell rotor bearing (13) in the hot gas housing (7).

5. Pressure wave supercharger according to one of the preceding claims, **characterized in that** the first cell rotor part (8a) and/or the second cell rotor part (8b) are connected in a fixed manner to the rotor shaft (12).

6. Pressure wave supercharger according to one of Claims 1 to 4, **characterized in that** the first cell rotor part (8a) and the second cell rotor part (8b) are arranged on the rotor shaft (12) in such a way as to be movable in the direction of extent of the rotor shaft (12).

7. Pressure wave supercharger according to one of the preceding claims, **characterized in that** a spring (28), which produces a mutually repulsive force on the two cell rotor parts (8a, 8b), is arranged between the first and the second cell rotor part (8a, 8b).

8. Pressure wave supercharger according to one of the preceding claims, **characterized in that** a stop (12c) is connected in a fixed manner to the rotor shaft (12), on which the first cell rotor part (8a) abuts in order to ensure a defined gap width (16) between an end (7f) of the hot gas housing (7) and a first end (8c) of the first cell rotor part (8a).

9. Pressure wave supercharger according to one of the preceding claims, **characterized in that** the cell rotor (8) comprises a multiplicity of cell rotor parts (8a, 8b), which are arranged in succession in the direction of extent of the rotor shaft (12), wherein the multiplicity is in a range of between 3 and 30.

10. Pressure wave supercharger according to one of the preceding claims, **characterized in that** the first cell rotor part (8a) and the second cell rotor part (8b) are made from different materials, wherein the material of the first cell rotor part (8a) has a higher heat resistance than the material of the second cell rotor part (8b).

11. Pressure wave supercharger according to Claim 10, **characterized in that** the first cell rotor part (8a) is composed of a heat-resistant steel of high hot strength.

12. Pressure wave supercharger according to Claim 10 or 11, **characterized in that** the second cell rotor part (8b) is composed of a plastic.

13. Pressure wave supercharger according to one of the preceding claims, **characterized in that** the first cell rotor part (8a) and the second cell rotor part (8b) are arranged in succession in the direction of extent of the rotor shaft (12) and have a transition point, and **in that** a labyrinth seal (26) is arranged at the transition point.

14. Pressure wave supercharger according to one of Claims 1 to 11, **characterized in that** the first cell rotor part (8a) and the second cell rotor part (8b) are arranged in succession in the direction of extent of the rotor shaft (12), and **in that** the second cell rotor part (8b) and a section (11a) of the rotor casing (11) surrounding the second cell rotor part (8b) are matched to one another in design in such a way that the second cell rotor part (8b) and the surrounding section (11a) form a labyrinth seal (26) with respect to one another.

15. Pressure wave supercharger according to one of the preceding claims, **characterized in that** the hot gas housing (7) comprises a heat exchanger (7c), and **in that** the heat exchanger (7c) is designed in such a way that the high-pressure exhaust duct (4) can be cooled.

16. Pressure wave supercharger according to Claim 15, **characterized in that** the heat exchanger (7c) is designed in such a way that the second cell rotor bearing (13) is cooled first, followed by the high-pressure exhaust duct (4).

## Revendications

1. Compresseur à ondes de pression (1) pour comprimer de l'air frais (2a) pour un moteur à combustion, comprenant un boîtier de gaz froid (6), un boîtier de gaz chaud (7) ainsi qu'un boîtier de rotor (11) disposé entre eux, un rotor à cellules rotatif (8) étant disposé à l'intérieur du boîtier de rotor (11), le rotor à cellules (8) présentant une pluralité de cellules de rotor (10) qui s'étendent dans la direction d'étendue du rotor à cellules (8) et qui constituent une liaison fluidique, et le boîtier de gaz chaud (7) comprenant un conduit de gaz d'échappement haute pression (4) et un conduit de gaz d'échappement basse pression (5), et le boîtier de gaz froid (6) comprenant un conduit d'air frais (2) et un conduit d'air de suralimentation (3), et le conduit de gaz d'échappement haute pression (4), le conduit de gaz d'échappement basse pression (5), le conduit d'air frais (2) et le conduit d'air de suralimentation (3) étant connectés par conduction de fluide au rotor à cellules (8), le boîtier de gaz froid (6) comprenant un palier de rotor à cellules (14), le rotor à cellules (8) étant connecté à un arbre de rotor (12), l'arbre de rotor (12) étant supporté dans le palier de rotor à cellules (14), et le rotor à cellules (8) étant divisé dans la direction d'étendue de l'arbre de rotor (12) et comprenant au moins une première partie de rotor à cellules (8a) et une deuxième partie de rotor à cellules (8b), la première et la deuxième partie de rotor à cellules (8a, 8b) étant espacées mutuellement dans la direction d'étendue de l'arbre de rotor (12), en formant une fente (18), **caractérisé en ce que** la fente (18) est ouverte, de sorte que des cellules de rotor (10) se suivant les unes les autres depuis la première partie de rotor à cellules (8a) jusqu'à la deuxième partie de rotor à cellules (8b) dans la direction d'étendue de l'arbre de rotor (12) soient connectées les unes aux autres fluidiquement par le biais de la fente ouverte (18).

2. Compresseur à ondes de pression selon la revendication 1, **caractérisé en ce que** la fente (18) présente une largeur maximale de 0,5 mm.

3. Compresseur à ondes de pression selon l'une quelconque des revendications précédentes, **caractérisé en ce que** le rotor à cellules (8) est divisé au milieu dans la direction d'étendue de l'arbre de rotor (12).

4. Compresseur à ondes de pression selon l'une quelconque des revendications précédentes, **caractérisé en ce que** le boîtier de gaz chaud (7) comprend un deuxième palier de rotor à cellules (13), et **en ce que** l'arbre de rotor (12) du rotor à cellules (8) est supporté à la fois dans le premier palier de rotor à cellules (14) dans le boîtier froid (6) ainsi que dans le deuxième palier de rotor à cellules (13) dans le boîtier de gaz chaud (7).

5. Compresseur à ondes de pression selon l'une quelconque des revendications précédentes, **caractérisé en ce que** la première partie de rotor à cellules (8a) et/ou la deuxième partie de rotor à cellules (8b) sont connectées fixement à l'arbre de rotor (12).

6. Compresseur à ondes de pression selon l'une quelconque des revendications 1 à 4, **caractérisé en ce que** la première partie de rotor à cellules (8a) et la deuxième partie de rotor à cellules (8b) sont disposées dans la direction d'étendue de l'arbre de rotor (12) de manière déplaçable sur l'arbre de rotor (12).

7. Compresseur à ondes de pression selon l'une quelconque des revendications précédentes, **caractérisé en ce qu'**entre la première et la deuxième partie de rotor à cellules (8a, 8b) est disposé un ressort (28) qui génère sur les deux parties de rotor à cellules (8a, 8b) une force de répulsion mutuelle.

8. Compresseur à ondes de pression selon l'une quelconque des revendications précédentes, **caractérisé en ce qu'**une butée (12c) est connectée fixement à l'arbre de rotor (12), au niveau de laquelle bute la première partie de rotor à cellules (8a) afin d'assurer une largeur de fente définie (16) entre un côté frontal (7f) du boîtier de gaz chaud (7) et un premier côté frontal (8c) de la première partie de rotor à cellules (8a).

9. Compresseur à ondes de pression selon l'une quelconque des revendications précédentes, **caractérisé en ce que** le rotor à cellules (8) comprend une pluralité de parties de rotor à cellules (8a, 8b), qui sont disposées les unes derrière les autres dans la direction d'étendue de l'arbre de rotor (12), la pluralité étant comprise dans la plage de 3 à 30.

10. Compresseur à ondes de pression selon l'une quelconque des revendications précédentes, **caractérisé en ce que** la première partie de rotor à cellules (8a) et la deuxième partie de rotor à cellules (8b) se composent d'un matériau différent, le matériau de la première partie de rotor à cellules (8a) présentant une plus grande résistance à la chaleur que le matériau de la deuxième partie de rotor à cellules (8b).

11. Compresseur à ondes de pression selon la revendication 10, **caractérisé en ce que** la première partie de rotor à cellules (8a) se compose d'un acier solide à chaud, résistant à la chaleur.

12. Compresseur à ondes de pression selon la revendication 10 ou 11, **caractérisé en ce que** la deuxième partie de rotor à cellules (8b) se compose d'un plastique.

13. Compresseur à ondes de pression selon l'une quelconque des revendications précédentes, **caractérisé en ce que** la première partie de rotor à cellules (8a) et la deuxième partie de rotor à cellules (8b) sont disposées l'une derrière l'autre dans la direction d'étendue de l'arbre de rotor (12) et présentent une zone de transition, et **en ce qu'**un joint à labyrinthe (26) est disposé au niveau de la zone de transition.

14. Compresseur à ondes de pression selon l'une quelconque des revendications 1 à 11, **caractérisé en ce que** la première partie de rotor à cellules (8a) et la deuxième partie de rotor à cellules (8b) sont disposées l'une derrière l'autre dans la direction d'étendue de l'arbre de rotor (12), et **en ce que** la deuxième partie de rotor à cellules (8b) ainsi qu'une portion (11a) du boîtier de rotor (11) entourant la deuxième partie de rotor à cellules (8b) sont configurées de manière adaptée l'une à l'autre de telle sorte que la deuxième partie de rotor à cellules (8b) ainsi que la portion l'entourant (11a) constituent ensemble un joint à labyrinthe (26).

15. Compresseur à ondes de pression selon l'une quelconque des revendications précédentes, **caractérisé en ce que** le boîtier de gaz chaud (7) comprend un échangeur de chaleur (7c) et **en ce que** l'échangeur de chaleur (7c) est configuré de telle sorte que le conduit de gaz d'échappement haute pression (4) puisse être refroidi.

16. Compresseur à ondes de pression selon la revendication 15, **caractérisé en ce que** l'échangeur de chaleur (7c) est configuré de telle sorte que le deuxième palier de rotor à cellules (13) soit refroidi en premier, suivi du conduit de gaz d'échappement haute pression (4).
